# EUROPEAN PATENT APPLICATION

(11) **EP 4 420 812 A1**
(43) Date of publication of application: **28.08.2024**
(21) Application number: 22883572.4
(22) Date of filing: 18.10.2022
(51) Int. Cl.: B22F 10/80, B22F 10/16, B22F 10/25, B22F 10/28, B22F 10/31, B22F 10/60, B22F 10/66, B22F 10/85, B33Y 10/00, B33Y 50/02

(54) **METHOD FOR MEASURING DEFORMATION AMOUNT OF DEFORMATION PART OF ADDITIVELY FABRICATED TEST OBJECT AND METHOD FOR DETERMINING PROPER CONDITIONS FOR ADDITIVE FABRICATION**

(30) Priority: 19.10.2021 JP 2021171182
(71) Applicant: Proterial, Ltd., Tokyo 135-0061 (JP)
(72) Inventor: OSMA, Steven James, Tokyo 100-8280 (JP); KAWANAKA, Hirotsugu, Tokyo 100-8280 (JP); MATSUSHITA, Shinji, Tokyo 100-8280 (JP); PARK, Minseok, Tokyo 100-8280 (JP); YASUDA, Yusuke, Tokyo 100-8280 (JP)
(74) Representative: MERH-IP Matias Erny Reichl Hoffmann Patentanwälte PartG mbB
(86) International application number: PCT/JP2022/038762
(87) International publication number: WO 2023/068268

(57) **Abstract**

An object is to provide a method for measuring a deformation amount of a deformation part of an additively manufactured test object that allows accurately evaluating deformation due to residual stress of the additively manufactured test object in a state of the additively manufactured test object being separated from a baseplate. The method for measuring the deformation amount of the deformation part of the additively manufactured test object includes: a manufacturing step of performing additive manufacturing using metal powder under a predetermined condition to manufacture the additively manufactured test object including a reference part, a deformation part and a coupling part integrating the reference part and the deformation part arranged in a surface direction of an upper surface of a baseplate on the upper surface of the baseplate such that the reference part, the deformation part, and the coupling part are joined to the upper surface of the baseplate; a separation step of separating the additively manufactured test object from the upper surface of the baseplate; and a measurement step of measuring the deformation amount of the deformation part based on the reference part of the additively manufactured test object separated from the upper surface of the baseplate.

## Description

### Technical Field

The present invention relates to a method for measuring a deformation amount of a deformation part of an additively manufactured test object manufactured by performing additive manufacturing (additive fabrication) using metal powder and a method for determining an optimum condition for additive manufacturing used when the additive manufacturing is performed using metal powder.

### Background Art

In a field of additive manufacturing, considering an influence of deformation due to accumulation of residual stress generated by processes of heating and cooling of a material, a condition of additive manufacturing needs to be adjusted and a shape of an additively manufactured object need to be designed (Non Patent Literature 1). To quantify a degree of the deformation depending on a condition of additive manufacturing, a sample of an additively manufactured object to measure a deformation amount (an additively manufactured test object) is required (Patent Literatures 1 and 2).

In the additive manufacturing process, as described in Non Patent Literature 2, the influence of deformation by residual stress cannot be measured. As described in Non Patent Literature 3, the influence of residual stress usually appears when the additively manufactured object is separated from a baseplate after an additive manufacturing step. In Non Patent Literature 3, using an additively manufactured test object including a deformation part having a cantilever shape, an attempt of measuring an influence of residual stress is performed. The deformation part having the cantilever shape at least has an aspect ratio of 2:1 and bending can be quantified.

### Citation List

### Patent Literature

Patent Literature 1: WO 2020/176283
Patent Literature 2: WO 2020/191263

### Non Patent Literature

Non Patent Literature 1: Gibson, I. et al. "Additive manufacturing technologies." Springer, (2014).
Non Patent Literature 2: Cruise, R. et al. "Residual stress analysis of structural stainless steel sections." Journal of Constructional Steel Research 64.3 (2008)
Non Patent Literature 3: Li, C., et al. "Efficient multiscale prediction of cantilever distortion by selective laser melting." Proc. 27th Annu. Int. Solid Free. Fabr. Symp. (2016)

### Summary of Invention

### Technical Problem

The additively manufactured test object is held in a state in which at least a part thereof is mounted on a baseplate for measurement. One reason thereof is that when the additively manufactured test object is completely separated, it is difficult to set a reference position of deformation of the additively manufactured test object required for accurate measurement of the deformation due to residual stress of the additively manufactured test object.

The other one reason that the additively manufactured test object is held to the baseplate is to allow appropriately comparing a different additively manufactured test object. Usually, as a method of separating the additively manufactured test object from the baseplate, wire cut that heats a wire to a temperature exceeding a melting point of a material of the additively manufactured test object and slowly guides the wire at a deformation part to cut the deformation part from the baseplate is used. However, it is assumed that the wire deforms during the cut to result in non-uniform cut and an error of about 1 mm at the maximum occurs at a position of the wire cut, and precise cut by the wire cut is difficult. In view of this, accurately comparing deformation amounts of a plurality of the additively manufactured test objects separated from the baseplate is difficult.

The baseplate is a thick plate made of a firm material, such as a stainless steel and a carbon steel, and is manufactured to bear a large temperature change and be completely heated without generating a crack or plastic deformation. Usually, the baseplate used for the additive manufacturing of the additively manufactured test object is cleaned after separated from the additively manufactured test object and is used again for the additive manufacturing of another additively manufactured test object. However, when it is desired to store the additively manufactured test object in a case where the deformation amount of the additively manufactured test object is measured again and for direct comparison between the additively manufactured test object and the different additively manufactured test object, the additively manufactured test object need to be held in a state of being mounted on the baseplate. Therefore, the baseplate on which the additively manufactured test object is manufactured cannot be used for manufacturing of a new additively manufactured test object.

The present invention has been made in consideration of the problems, and an object is to provide a method for measuring a deformation amount of a deformation part of an additively manufactured test object that allows accurately evaluating deformation due to residual stress of the additively manufactured test object in a state of the additively manufactured test object being separated from a baseplate and a method for determining an optimum condition for additive manufacturing.

### Solution to Problem

To solve the problem, a method for measuring a deformation amount of a deformation part of an additively manufactured test object (additively fabricated test object) of the present invention is a method for measuring the deformation amount of the deformation part of the additively manufactured test object manufactured on an upper surface of a baseplate by performing additive manufacturing (additive fabrication) using metal powder. The method comprises: a manufacturing step (fabrication step) of performing the additive manufacturing using the metal powder under a predetermined condition to manufacture the additively manufactured test object including a reference part, a deformation part, and a coupling part integrating the reference part and the deformation part arranged in a surface direction of the upper surface of the baseplate on the upper surface of the baseplate such that the reference part, the deformation part, and the coupling part are joined to the upper surface of the baseplate; a separation step of separating the additively manufactured test object from the upper surface of the baseplate; and a measurement step of measuring the deformation amount of the deformation part based on the reference part of the additively manufactured test object separated from the upper surface of the baseplate.

The method for measuring the deformation amount of the deformation part of the additively manufactured test object of the present invention allows accurately evaluating deformation due to residual stress of the additively manufactured test object in a state of the additively manufactured test object being separated from the baseplate.

A method for determining an optimum condition for additive manufacturing of the present invention comprises: a measurement step of using the method for measuring the deformation amount of the deformation part of the additively manufactured test object described above to measure the deformation amount of the deformation part; and a determination step of determining the optimum condition for the additive manufacturing from the predetermined condition and the deformation amount.

The method for determining the optimum condition for the additive manufacturing of the present invention can determine the optimum condition for the additive manufacturing from a result of accurately evaluating the deformation due to residual stress of the additively manufactured test object in a state of being separated from the baseplate.

The method for determining an optimum condition for the additive manufacturing (additive fabrication) of the present invention is a method for determining an optimum condition for the additive manufacturing used when the additive manufacturing is performed using metal powder. The method comprises: a setting step of setting a setting condition of the additive manufacturing to a predetermined condition; a manufacturing step (fabrication step) of performing the additive manufacturing using the metal powder under the setting condition to manufacture an additively manufactured test object (additively fabricated test object) including a reference part, a deformation part, and a coupling part integrating the reference part and the deformation part arranged in a surface direction of an upper surface of a baseplate on the upper surface of the baseplate such that the reference part, the deformation part, and the coupling part are joined to the upper surface of the baseplate; a separation step of separating the additively manufactured test object from the upper surface of the baseplate; a measurement step of measuring a deformation amount of the deformation part based on the reference part of the additively manufactured test object separated from the upper surface of the baseplate; an adjustment step of using at least one kind of design of experiments and regression analysis to obtain a correction condition of the additive manufacturing under which the deformation amount is inferred to be a predetermined value or less from the setting condition and the deformation amount when the deformation amount exceeds the predetermined value after the measurement step; and a determination step of determining the setting condition as the optimum condition for the additive manufacturing when the deformation amount is the predetermined value or less after the measurement step. After the adjustment step, the setting step, the manufacturing step, the separation step, the measurement step, and the adjustment step are repeated in this order until the optimum condition are determined, and at the setting step after the adjustment step, the predetermined condition is set to the correction condition.

The method for determining the optimum condition for the additive manufacturing of the present invention can determine the optimum condition for the additive manufacturing from a result of accurately evaluating the deformation due to residual stress of the additively manufactured test object in a state of being separated from the baseplate.

The present description includes part or all of the contents as disclosed in the description and/or drawings of Japanese Patent Application No. 2021-171182, which is a priority document of the present application.

### Advantageous Effects of Invention

The present invention allows accurately evaluating deformation due to residual stress of the additively manufactured test object in a state of the additively manufactured test object being separated from the baseplate.

With reference to the following detailed description and the accompanying drawings, thoughts, other advantages, and features of the present invention can be further completely understood.

### Brief Description of Drawings

Fig. 1 is a flowchart depicting a method for measuring a deformation amount of a deformation part of an additively manufactured test object according to a first embodiment.
Figs. 2A and 2B are a schematic perspective view and a schematic side view each illustrating a manufacturing step in the method for measuring the deformation amount of the deformation part of the additively manufactured test object according to the first embodiment.
Fig. 3A is a schematic perspective view illustrating an aspect ratio of a reference part and a cantilever part in the method for measuring the deformation amount of the deformation part of the additively manufactured test object according to the first embodiment.
Fig. 3B is a graph illustrating a ratio of bending to the aspect ratio of the reference part and the cantilever part illustrated in Fig. 3A.
Fig. 4A is a schematic diagram describing an example of a height of the reference part in the method for measuring the deformation amount of the deformation part of the additively manufactured test object according to the first embodiment.
Fig. 4B is a schematic diagram describing another example of the height of the reference part in the method for measuring the deformation amount of the deformation part of the additively manufactured test object according to the first embodiment.
Fig. 5A is a schematic diagram describing an example of a height of the deformation part in the method for measuring the deformation amount of the deformation part of the additively manufactured test object according to the first embodiment.
Fig. 5B is a schematic diagram describing another example of the height of the deformation part in the method for measuring the deformation amount of the deformation part of the additively manufactured test object according to the first embodiment.
Figs. 6A, 6C, and 6E are schematic perspective views illustrating an example of the additively manufactured test object manufactured in a manufacturing step according to an embodiment and Figs. 6B, 6D, and 6F are schematic side views of the additively manufactured test object illustrated in Figs. 6A, 6C, and 6E.
Fig. 7 is a flowchart depicting a method for determining an optimum condition for additive manufacturing according to a second embodiment.

### Description of Embodiments

### A. Method for Measuring Deformation Amount of Deformation Part of Additively Manufactured Test Object and Method for Determining Optimum condition for Additive manufacturing Using Same

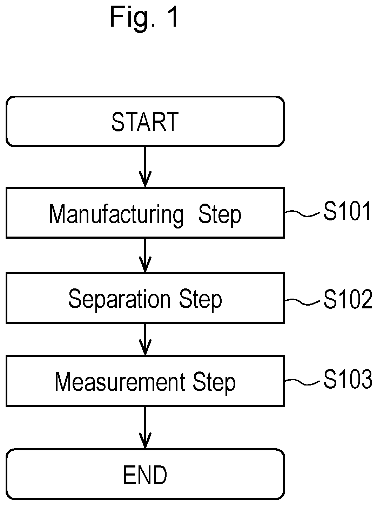

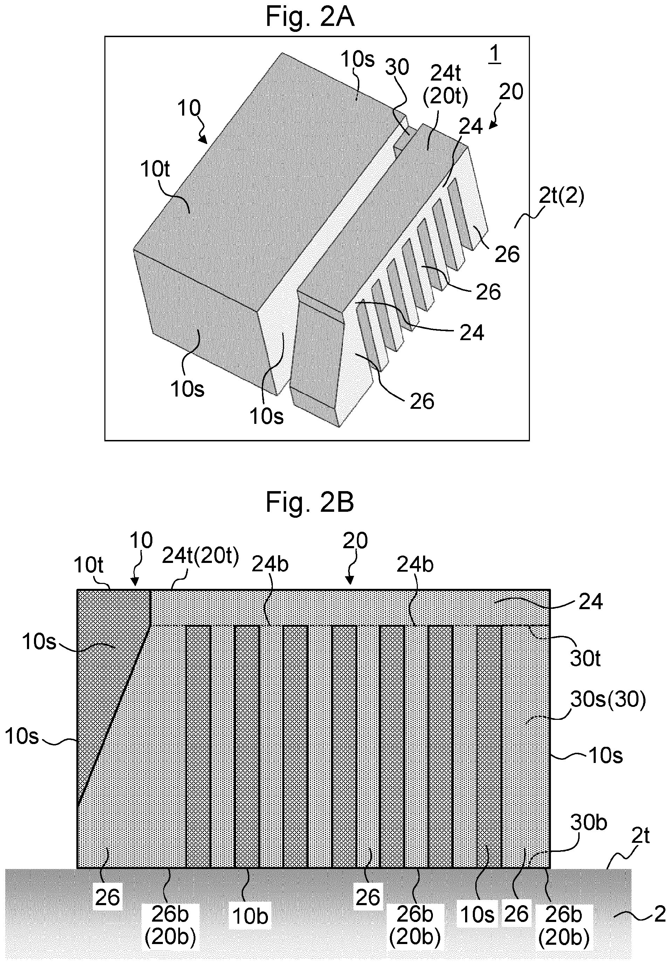

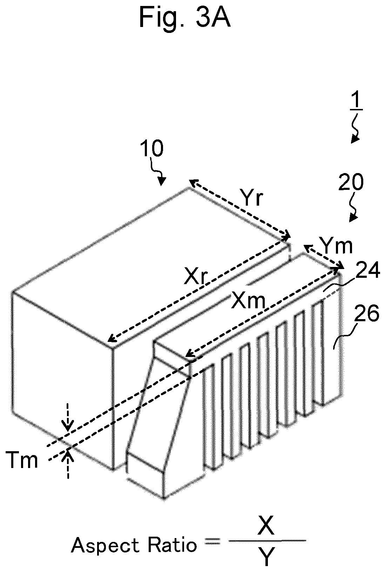

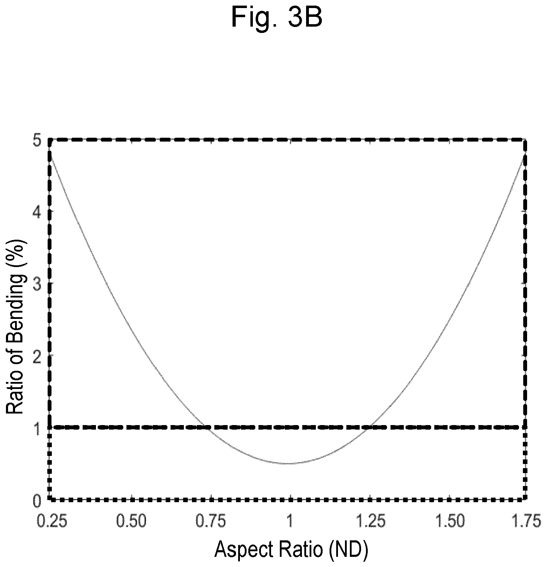

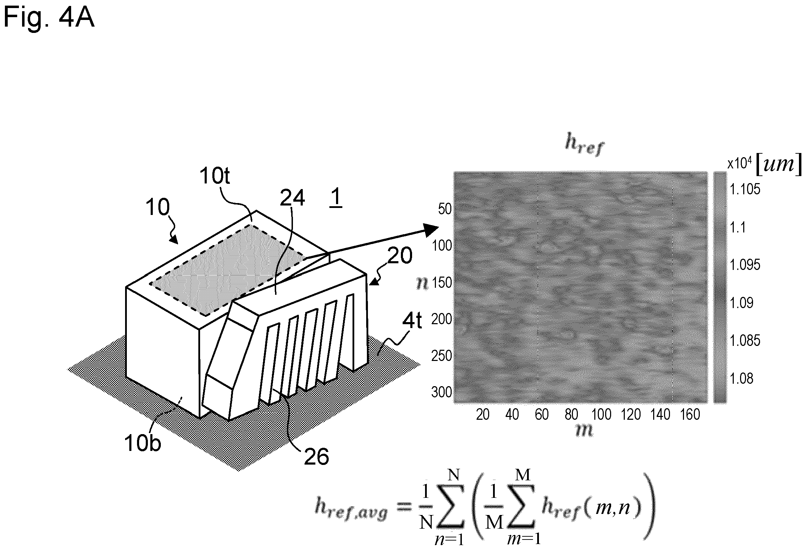

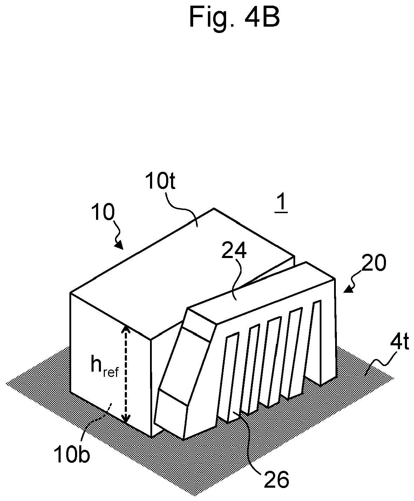

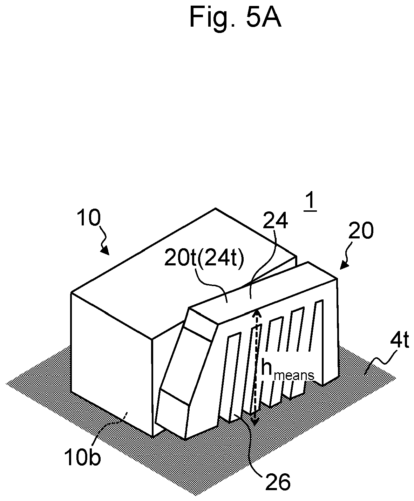

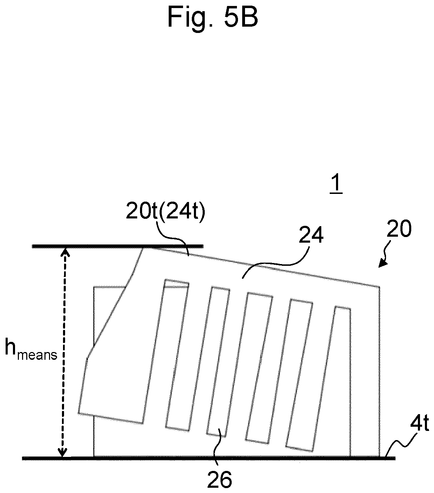

The following describes embodiments of the method for measuring the deformation amount of the deformation part of the additively manufactured test object and the method for determining an optimum condition for the additive manufacturing using the same of the present invention. First, an outline of the embodiments of the method for measuring the deformation amount of the deformation part of the additively manufactured test object of the present invention is described by exemplifying a first embodiment. Fig. 1 is a flowchart depicting the method for measuring the deformation amount of the deformation part of the additively manufactured test object according to the first embodiment. Figs. 2A and 2B are a schematic perspective view and a schematic side view each illustrating a manufacturing step in the method for measuring the deformation amount of the deformation part of the additively manufactured test object according to the first embodiment. Fig. 3A is a schematic perspective view illustrating an aspect ratio of a reference part and a cantilever part in the method for measuring the deformation amount of the deformation part of the additively manufactured test object according to the first embodiment. Fig. 3B is a graph illustrating a ratio of bending to the aspect ratio of the reference part and the cantilever part illustrated in Fig. 3A. Figs. 4A and 4B are schematic diagrams each describing an example and another example of a height of the reference part in the method for measuring the deformation amount of the deformation part of the additively manufactured test object according to the first embodiment. Figs. 5A and 5B are schematic diagrams each describing an example and another example of a height of the deformation part in the method for measuring the deformation amount of the deformation part of the additively manufactured test object according to the first embodiment.

In the method for measuring the deformation amount of the deformation part of the additively manufactured test object according to the first embodiment, first, as illustrated in Fig. 1 and Figs. 2A and 2B, using target metal powder (for example, powder of stainless steel 316L) for which an optimum condition for the additive manufacturing are determined, the additive manufacturing is performed under predetermined condition. Thus, an additively manufactured test object 1 including a reference part 10, a deformation part 20, and a coupling part 30 that integrates them is manufactured on the upper surface 2t of the baseplate 2 (a manufacturing step S101). In the additively manufactured test object 1, the reference part 10, the deformation part 20, and the coupling part 30 are arranged in a surface direction of an upper surface 2t of a baseplate 2.

In the additively manufactured test object 1 manufactured at the manufacturing step S101, the reference part 10 has a rectangular parallelepiped shape, and the coupling part 30 is joined to one end at an adjacent other side surface 10s side in one side surface 10s of the reference part 10. The deformation part 20 includes a cantilever part 24 having a rectangular parallelepiped shape extending in a direction parallel to both the surface direction of the upper surface 2t of the baseplate 2 and a surface direction of the side surface 10s of the reference part 10 and a comb teeth part 26 that extends from a bottom surface 24b of the cantilever part 24 to the upper surface 2t of the baseplate 2. The deformation part 20 has a comb tooth (one end of the deformation part 20) at one end side of the comb teeth part 26 joined to a side surface 30s of the coupling part 30. An upper surface 10t of the reference part 10 and an upper surface 24t of the cantilever part 24 (an upper surface 20t of the deformation part 20) are parallel to the upper surface 2t of the baseplate 2, and heights (positions in a stacking direction in the additive manufacturing (a direction perpendicular to the upper surface 2t of the baseplate 2)) of these upper surfaces 10t, 24t to the upper surface 2t of the baseplate 2 are the same. An upper surface 30t of the coupling part 30 and the bottom surface 24b of the cantilever part 24 are also parallel to the upper surface 2t of the baseplate 2, and heights of these surfaces 30t, 24b to the upper surface 2t of the baseplate 2 are the same. At the manufacturing step S 101, the additively manufactured test object 1 is manufactured such that a bottom surface 10b of the reference part 10, a bottom surface 26b of the comb teeth part 26 of the deformation part 20 (a bottom surface 20b of the deformation part 20), and a bottom surface 30b of the coupling part 30 are joined to the upper surface 2t of the baseplate 2.

A ratio of a width Xr to a length Yr of the reference part 10 having the rectangular parallelepiped shape as illustrated in Fig. 3A (an aspect ratio (Xr/Yr)) is 3/4 or more to 5/4 or less. Thus, as illustrated in Fig. 3B, a ratio of bending due to residual stress of the reference part 10 becomes 1% or less. Note that *when additive manufacturing is performed under the predetermined condition using the metal powder to manufacture the reference part 10 alone on the upper surface 2t of the baseplate 2 such that the bottom surface 10b of the reference part 10joins to the upper surface 2t of the baseplate 2, and after heating and cooling processes of the reference part 10 in the additive manufacturing are terminated and a room temperature is reached, the reference part 10 is completely separated from the upper surface 2t of the baseplate 2,* the ratio of bending due to residual stress of the reference part 10 means the ratio of bending due to residual stress of the separated reference part 10 and a ratio of a difference between a height after separation to a height before separation and the height before separation ((height after separation - height before separation)/height before separation). Here, the "height before separation" means a dimension in a direction perpendicular to the upper surface of the baseplate in the reference part before being separated from the upper surface of the baseplate, and the "height after separation" means a dimension in a direction same as the perpendicular direction in the reference part after deformation due to residual stress after being separated from the upper surface of the baseplate. Additionally, a ratio of a width Xm (a length of the cantilever part 24 in the extending direction) to a length Ym (a width in a direction perpendicular to the extending direction of the cantilever part 24 and a direction parallel to the surface direction of the upper surface 2t of the baseplate 2) of the cantilever part 24 of the deformation part 20 having the rectangular parallelepiped shape as illustrated in Fig. 3A (an aspect ratio (Xm/Ym)) is larger than 5/4. Therefore, as illustrated in Fig. 3B, the ratio of bending due to residual stress of the cantilever part 24 becomes larger than 1%. Note that *when additive manufacturing is performed under the predetermined condition using the metal powder to manufacture the cantilever part 24 alone on the upper surface 2t of the baseplate 2 such that the bottom surface 24b of the cantilever part 24 joins to the upper surface 2t of the baseplate 2, and after heating and cooling processes of the cantilever part 24 in the additive manufacturing are terminated and a room temperature is reached, the cantilever part 24 is completely separated from the upper surface 2t of the baseplate 2,* the ratio of bending due to residual stress of the cantilever part 24 means the ratio of bending due to residual stress of the separated cantilever part 24 and a ratio of a difference between a height after separation to a height before separation and the height before separation ((height after separation - height before separation)/height before separation). Here, the "height before separation" means a dimension in a direction perpendicular to the upper surface of the baseplate in the cantilever part before being separated from the upper surface of the baseplate, and the "height after separation" means a dimension in a direction same as the perpendicular direction in the cantilever part after deformation due to residual stress after being separated from the upper surface of the baseplate.

A thickness Tm of the cantilever part 24 is a value between a thickness of one layer of a material layer added when the additively manufactured test object 1 is manufactured and the height of the deformation part 20. The concrete value of the thickness Tm of the cantilever part 24 is appropriately determined by a raw material and accuracy of a measurement device used to measure a deformation amount of the deformation part 20 described later. Specifically, the thickness Tm of the cantilever part 24 is determined by a condition under which the cantilever part 24 is not broken by stress or heat generated during the manufacturing and a condition under which the deformation amount of the cantilever part 24 (the deformation amount of the deformation part 20) can be measured by the measurement device. The thicker the thickness Tm of the cantilever part 24 is, the less the cantilever part 24 is broken, and the thinner the thickness Tm of the cantilever part 24 is, the larger the deformation amount of the cantilever part 24 becomes, and the measurement by the measurement device is easy. Therefore, a lower limit of Tm is determined by the raw material, and an upper limit of Tm is determined by the measurement device. As one example of the thickness Tm of the cantilever part 24, when the raw material is stainless steel 316L, 1.0 mm can be used.

Next, as illustrated in Fig. 1, after the heating and cooling processes in the additive manufacturing are terminated and the room temperature is reached, the additively manufactured test object 1 is separated from the upper surface 2t of the baseplate 2 (a separation step S102). At the separation step S 102, for example, by a cutting method, such as wire cut, the additively manufactured test object 1 is completely separated from the upper surface 2t of the baseplate 2 such that the bottom surface 10b of the reference part 10, the bottom surface 26b of the comb teeth part 26 of the deformation part 20 (the bottom surface 20b of the deformation part 20), and the bottom surface 30b of the coupling part 30 are completely separated from the upper surface 2t of the baseplate 2.

As illustrated in Fig. 4A to Fig. 5B, the additively manufactured test object 1 separated from the upper surface 2t of the baseplate 2 is installed on an installation plane 4t such that the bottom surface 10b of the reference part 10 is in close contact with the installation plane 4t. In this case, since the cantilever part 24 of the deformation part 20 has the aspect ratio (Xm/Ym) larger than 5/4, a position of a free end of the cantilever part 24 significantly bends upward so as to be higher than a position of a fixed end of the cantilever part 24 due to residual stress accumulated in the additive manufacturing process. The comb teeth part 26 of the deformation part 20 also deforms following the cantilever part 24. On the other hand, since the reference part 10 has the aspect ratio (Xr/Yr) of 3/4 or more to 5/4 or less, regardless of the influence of residual stress, the reference part 10 deforms only by a negligible extent compared with the deformation of the cantilever part 24.

Next, as illustrated in Fig. 1, regarding the additively manufactured test object 1 separated from the upper surface 2t of the baseplate 2, a height hₘₑₐₙₛ of the deformation part 20 based on a height h_{ref} of the reference part 10 (the deformation amount of the deformation part 20 based on the reference part 10) is measured as the deformation amount of the deformation part 20 of the additively manufactured test object 1 (a measurement step S103). That is, a difference between the height h_{ref} of the reference part 10 and the height hₘₑₐₙₛ of the deformation part 20 is measured as the deformation amount of the deformation part 20 of the additively manufactured test object 1.

As illustrated in Figs. 4A and 4B, the height h_{ref} of the reference part 10 is a height of the upper surface 10t of the reference part 10 with respect to the installation plane 4t where the reference part 10 is installed (a position in the stacking direction in the additive manufacturing (a direction perpendicular to the installation plane)). As illustrated in Fig. 4A, the height h_{ref} of the reference part 10 may be an average height h_{ref,avg} in a part or the entire region of the upper surface 10t of the reference part 10. As expressed in the formula shown in Fig. 4A, the average height h_{ref,avg} in a part or the entire region of the upper surface 10t of the reference part 10, for example, can be calculated as the average of the heights h_{ref} (m, n) at respective positions of a two-dimensional coordinate system (mn coordinate system) of a part or the entire region of the upper surface 10t of the reference part 10. Additionally, as illustrated in Fig. 4B, the height h_{ref} of the reference part 10 may be the height h_{ref} at one position of the upper surface 10t of the reference part 10.

As illustrated in Figs. 5A and 5B, the height hₘₑₐₙₛ of the deformation part 20 is a height of the upper surface 20t of the deformation part 20 with respect to the installation plane 4t where the reference part 10 is installed (a position in the stacking direction in the additive manufacturing). As illustrated in Fig. 5A, the height hₘₑₐₙₛ of the deformation part 20 may be a height at one position of the upper surface 20t of the deformation part 20 (the upper surface 24t of the cantilever part 24). Although not illustrated, the height hₘₑₐₙₛ of the deformation part 20 may be an average height of a part or the entire region of the upper surface 20t of the deformation part 20. The average height of a part or the entire region of the upper surface 20t of the deformation part 20, for example, can be calculated as an average of heights at respective positions in a two-dimensional coordinate system in a part or the entire region of the upper surface 20t of the deformation part 20. Furthermore, as illustrated in Fig. 5B, the height hₘₑₐₙₛ of the deformation part 20 may be the maximum height hₘₑₐₙₛ of the upper surface 20t of the deformation part 20.

In the method for measuring the deformation amount of the deformation part of the additively manufactured test object according to the first embodiment, the additive manufacturing is performed using the target metal powder (for example, the powder of the stainless steel 316L) for which an optimum condition for additive manufacturing is determined. Thus, the additively manufactured test object 1 is manufactured on the upper surface 2t of the baseplate 2. As the deformation amount due to residual stress of the additively manufactured test object 1, the height hₘₑₐₙₛ of the deformation part 20 based on the height h_{ref} of the reference part 10 in the additively manufactured test object 1 separated from the deformation part 20 (the deformation amount of the deformation part 20 based on the reference part 10) can be measured.

Accordingly, according to the method for measuring the deformation amount of the deformation part of the additively manufactured test object according to the embodiment, as in the first embodiment, by performing the additive manufacturing using the metal powder, the additively manufactured test object is manufactured on the baseplate. As the deformation amount due to residual stress of the additively manufactured test object, the deformation amount of the deformation part based on the reference part of the additively manufactured test object separated from the baseplate can be measured. Thus, in the state of the additively manufactured test object being separated from the baseplate, the deformation due to residual stress of the additively manufactured test object can be accurately evaluated. Furthermore, even when the additively manufactured test object is stored for measurement of the deformation amount of the additively manufactured test object again and direct comparison with another additively manufactured test object, the additively manufactured test object can be continuously manufactured on the baseplate.

Subsequently, the method for measuring the deformation amount of the deformation part of the additively manufactured test object and the method for determining an optimum condition for the additive manufacturing using the same according to the embodiment are described in detail.

### 1. Manufacturing step

In the manufacturing step, by performing the additive manufacturing (additive fabrication) using the metal powder and under the predetermined condition, the additively manufactured test object including the reference part, the deformation part, and the coupling part arranged in the surface direction of the upper surface of the baseplate, in which the coupling part integrates the reference part and the deformation part, is manufactured on the upper surface of the baseplate such that the reference part, the deformation part, and the coupling part are joined to the upper surface of the baseplate.

Although the metal powder of the additive manufacturing is not specifically limited, examples thereof include powder of stainless steel, powder of carbon steel, powder of alloy tool steel, powder of a Ni-based alloy, powder of a Ti-based alloy, powder of an aluminum alloy, and powder of a copper alloy.

Although the condition of additive manufacturing is not specifically limited, examples thereof include a type of a heat source, such as laser light and electron beam (hereinafter simply abbreviated as a "heat source" in some cases), input power (power) to the heat source, a diameter when a shape of the heat source in contact with the metal powder is expressed by a circle (a spot size), a speed at which the heat source is scanned to the metal powder (a scan speed), a scan interval at which the heat source is scanned to the metal powder (a hatch distance), and a thickness of one layer when the metal powder is stacked (layer thickness). Note that "performing the additive manufacturing using the metal powder under a predetermined condition" means, for example, performing the additive manufacturing using these conditions as the predetermined condition.

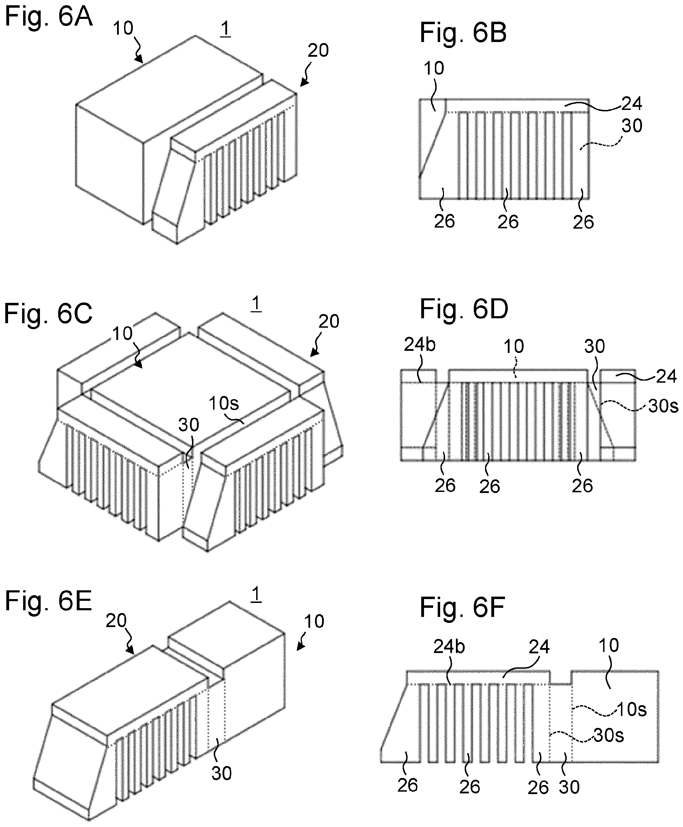

Here, Figs. 6A, 6C, and 6E are schematic perspective views illustrating an example of the additively manufactured test object manufactured in the manufacturing step according to the embodiment, and Figs. 6B, 6D, and 6F are schematic side views of the additively manufactured test object illustrated in Figs. 6A, 6C, and 6E, respectively.

The additively manufactured test object 1 illustrated in Figs. 6A and 6B are the same as the additively manufactured test object 1 illustrated in Figs. 2A and 2B. The additively manufactured test object 1 illustrated in Figs. 6C and 6D includes one reference part 10, the four deformation parts 20, and the four coupling parts 30. The reference part 10 has a rectangular parallelepiped shape, and the four coupling parts 30 are respectively joined to one ends at adjacent side surface sides in the four side surfaces 10s of the reference part 10. The four deformation parts 20 respectively include the cantilever parts 24 having a rectangular parallelepiped shape extending in a direction parallel to both of the surface direction of the upper surface of the baseplate (not illustrated) and the surface direction of the side surface 10s of the reference part 10 and comb teeth parts 26 that extend from bottom surfaces 24b of the cantilever parts 24 to the upper surface of the baseplate (not illustrated). The four deformation parts 20 respectively have comb teeth at one end sides of the comb teeth parts 26 (one ends of the deformation parts 20) respectively joined to the side surfaces 30s of the four coupling parts 30. The additively manufactured test object 1 illustrated in Figs. 6E and 6F includes one reference part 10, one deformation part 20, and one coupling part 30. The reference part 10 has a rectangular parallelepiped shape, and the coupling part 30 is joined to one side surface 10s of the reference part 10. The deformation part 20 includes the cantilever part 24 having a rectangular parallelepiped shape extending in a direction perpendicular to one side surface 10s of the reference part 10 and the comb teeth part 26 extending from the bottom surface 24b of the cantilever part 24 to the upper surface of the baseplate (not illustrated). The deformation part 20 has the comb tooth at one end side of the comb teeth part 26 (one end of the deformation part 20) joined to the side surface 30s of the coupling part 30.

As long as the manufacturing step is a step that manufactures the additively manufactured test object on the upper surface of the baseplate, the manufacturing step is not specifically limited. Like the test object illustrated in Figs. 6A, 6C, and 6E, the manufacturing step may be a step of manufacturing the additively manufactured test object including one or a plurality of the reference parts, one or a plurality of the deformation parts, and one or a plurality of the coupling parts.

The manufacturing step, for example, is a step in accordance with a Powder Bed Fusion method that repeats a step of bedding metal powder on the upper surface of the baseplate by one layer and a step of melting only a region corresponding to the additively manufactured test object in one layer of the metal powder by the heat source to integrate it. In the manufacturing step in accordance with the Powder Bed Fusion method, the metal powder is bedded on the upper surface of the baseplate, and the lowermost layer of the additively manufactured test object is joined to the baseplate in the melting and integration step by the heat source. However, the step in accordance with the Powder Bed Fusion method is one example of the manufacturing step, and the manufacturing step is not limited to the step in accordance with the Powder Bed Fusion method. As the manufacturing step, for example, a step in accordance with a Direct Energy Deposition method, a step in accordance with a Binder Jet method, and the like can also be used. Since these additive manufacturing (additive fabrication) methods are the well-known techniques, the detailed description thereof is omitted.

Like the reference part illustrated in Figs. 6A, 6C, and 6E, the manufacturing step may be a step of manufacturing the reference part having the rectangular parallelepiped shape. The manufacturing step is preferably a step of manufacturing the reference part in which the deformation due to residual stress generated in the additive manufacturing is small as much as possible. Specifically, for example, when the reference part having the rectangular parallelepiped shape is manufactured, in a case where the metal powder is metal powder, such as powder of stainless steel, or the like, the manufacturing step is preferably a step of manufacturing the reference part having the ratio of the width (horizontal dimension) to the length (vertical dimension) (the aspect ratio (Xr/Yr)) of 3/4 or more to 5/4 or less. This is because the deformation of the reference part due to residual stress decreases and the deformation amount of the deformation part based on the reference part can be accurately measured in the measurement step.

Like the deformation part illustrated in Figs. 6A, 6C, and 6E, the manufacturing step is preferably a step of manufacturing the deformation part that includes the cantilever part extending in the surface direction of the upper surface of the baseplate and the comb teeth part extending from the bottom surface of the cantilever part to the upper surface of the baseplate, and has (includes) one end joined to the coupling part. The manufacturing step is preferably a step of manufacturing the cantilever part such that the deformation due to residual stress generated in the additive manufacturing increases to the extent that the deformation amount can be reliably measured in the measurement step. Specifically, for example, when the metal powder is metal powder, such as powder of stainless steel, or the like, the manufacturing step is preferably a step of manufacturing the cantilever part having the ratio of the length in the extending direction to the width (the aspect ratio (Xm/Ym)) which is larger than 5/4. This is because the deformation of the cantilever part due to residual stress increases and the deformation amount of the deformation part based on the reference part can be reliably measured in the measurement step.

The manufacturing step may be a step of manufacturing the additively manufactured test object in which the upper surface of the reference part and the upper surface of the cantilever part are parallel to the upper surface of the baseplate. Such a step may be a step of manufacturing the additively manufactured test object in which heights of the upper surface of the reference part and the upper surface of the cantilever part with respect to the upper surface of the baseplate (the position in the stacking direction in the additive manufacturing (the direction perpendicular to the upper surface of the baseplate)) are the same.

The shape and the aspect ratio (Xr/Yr) of the reference part manufactured in the manufacturing step, the shape of the deformation part and the aspect ratio (Xm/Ym) of the cantilever part manufactured in the manufacturing step, and the shape of the additively manufactured test object manufactured in the manufacturing step mean the ones before the additively manufactured test object is separated from the upper surface of the baseplate in the separation step after the respective heating and cooling processes in the additive manufacturing terminate and the additively manufactured test object reaches a room temperature.

### 2. Separation Step

In the separation step, the additively fabricated test object is separated from the upper surface of the baseplate. In the separation step, usually, after the respective heating and cooling processes in the additive manufacturing terminate and the additively manufactured test object reaches a room temperature, the additively manufactured test object is separated from the upper surface of the baseplate. In the separation step, the additively manufactured test object may be completely separated from the upper surface of the baseplate such that the reference part, the deformation part, and the coupling part are completely separated from the upper surface of the baseplate, or, for example, the additively manufactured test object may be partially separated from the upper surface of the baseplate such that only the deformation part is completely separated from the upper surface of the baseplate.

The method of separating the additively manufactured test object from the upper surface of the baseplate is not specifically limited, and includes, for example, a cutting method, such as wire cut.

Many materials usually undergo a process of expansion and contraction by the heating and cooling processes in the additive manufacturing. When local and periodical heating and cooling processes of the material by the additive manufacturing of the metal powder are present, in each region of the whole additively manufactured object (additively fabricated object), such as the additively manufactured test object, various extents of expansions and contractions of the material possibly occur according to the condition of additive manufacturing. Although the shape of the additively manufactured object immediately after the additive manufacturing may be as intended, a local region as a local region that has once expanded and contracts in response to normalization of the temperature is possibly present and conversely, a local region as a local region that has once contracted and expands in response to normalization of the temperature is possibly present. In view of this, in the additively manufactured object, tensile stress occurs in a part of the local region, and simultaneously, compressive stress occurs in another local region. These stresses are known as what is called "residual stress."

Among the metal powders, in a case of metal powder having considerably high ductility, such as an aluminum alloy and a copper alloy, as the temperature of the material normalizes, the deformation of the additively manufactured object is immediately generated due to residual stress in some cases. Even in a case of another metal powder, depending on a balance state of an internal tensile force, an internal compression, an external load, and a surface tension of the additively manufactured object, the additively manufactured object is possibly simply cracked by pressure. Such a crack occurs when all internal stresses of the additively manufactured object exceed yield stress, and possibly occurs in a case of some metal powders having low ductility, such as alloy tool steel.

In contrast to this, there may be a case where the internal tensile force, the internal compression, the external load, and the surface tension of the additively manufactured object are completely balanced. In this case, depending on the extent of the internal residual stress, the state of the additively manufactured object is possibly a stable state with condition. In the state, when the balance of the load of the additively manufactured object is lost, the state of the additively manufactured object possibly immediately becomes an unstable state. Thus, to return the additively manufactured object with the load in the unbalance and unstable state to the stable state with the balanced load, by deforming the additively manufactured object, the load to the additively manufactured object need to be released. Note that in a case of the additively manufactured object manufactured from the metal powder having low ductility, a crack possibly occurs immediately by deformation.

Due to the above-described reason, the additively manufactured test object separated from the upper surface of the baseplate deforms due to residual stress accumulated in the additive manufacturing process. In view of this, in the measurement step described later, the deformation amount of the deformation part based on the reference part can be measured.

### 3. Measurement Step

In the measurement step, the deformation amount of the deformation part based on the reference part of the additively manufactured test object separated from the upper surface of the baseplate is measured.

As long as the measurement step is a step that measures the deformation amount, the measurement step is not specifically limited, but, for example, a step of measuring an amount of change in a difference between dimensions of the reference part and the deformation part as the deformation amount is preferred. Among them, a step of measuring the amount of change in the difference between the dimensions of the reference part and the deformation part in the same direction as the deformation amount is preferred, and especially, a step of measuring the amount of change in the difference between the dimensions of the reference part and the deformation part along the deformation direction as the deformation amount is preferred.

As the measurement step of measuring the amount of change in the difference between the dimensions of the reference part and the deformation part along the deformation direction of a measuring obj ect as the deformation amount, for example, the step of measuring the amount of change in the height of the deformation part based on the height of the reference part as the deformation amount is preferred, and among them, as in the first embodiment, the step of measuring the height of the deformation part based on the height of the reference part as the deformation amount is preferred. The height of the reference part, for example, as illustrated in Fig. 4A and Fig. 4B, may be the height at one position of the upper surface of the reference part or an average of heights at a plurality of positions of the upper surface of the reference part. The height of the deformation part, for example, as illustrated in Figs. 5A and 5B, may be the height at one position of the upper surface of the deformation part or an average of heights at a plurality of positions of the upper surface of the deformation part. As illustrated in Fig. 5B, the height of the deformation part may be the maximum height of the upper surface of the deformation part. Note that the height direction usually matches the stacking direction in the additive manufacturing.

When the manufacturing step is a step of manufacturing a plurality of the reference parts or a plurality of the deformation parts, when the amount of change in the difference between the dimensions of the reference part and the deformation part is measured as the deformation amount in the measurement step, a difference between a sum of the dimensions of the plurality of the reference parts and a sum of the dimensions of the plurality of the deformation parts, or a difference between an average of the dimensions of the plurality of the reference parts and an average of the dimensions of the plurality of the deformation parts may be measured as the deformation amount. In this case, the maximum difference among the differences in the dimensions between the reference part and the deformation part in a plurality of combinations of the reference parts and the deformation parts may be measured as the deformation amount, the smallest difference among them may be measured as the deformation amount, and the intermediate difference among them may be measured as the deformation amount.

### 4. Method for measuring Deformation Amount of tDeformation Part

The method for measuring the deformation amount of the deformation part is a method for measuring the deformation amount of the deformation part of the additively manufactured test object manufactured on the upper surface of the baseplate by performing the additive manufacturing using the metal powder and includes the manufacturing step, the separation step, and the measurement step.

### 5. Method for Determining Optimum condition for Additive manufacturing Using Method for Measuring Deformation Amount of Deformation Part of Additively Manufactured Test Object

The method for determining an optimum condition for additive manufacturing according to the embodiment includes the measurement step of using the method for measuring the deformation amount of the deformation part of the additively manufactured test object according to the embodiment described above to measure the deformation amount of the deformation part and a determination step of determining the optimum condition for additive manufacturing from the predetermined condition and the deformation amount, for example, using at least one kind of design of experiments and regression analysis.

The method for determining the optimum condition for additive manufacturing according to the embodiment, specifically, first, in the measurement step, by using the method for measuring the deformation amount of the deformation part of the additively manufactured test object according to the embodiment described above multiple times, the additive manufacturing is performed multiple times using the metal powder under the predetermined condition to manufacture a plurality of the additively manufactured test objects, and the deformation amounts of the deformation parts based on the reference parts in the plurality of sets of the reference parts and the deformation parts respectively included in the plurality of additively manufactured test objects are measured. Thus, a plurality of sets of teacher data including an explanatory variable as the predetermined condition of the additive manufacturing and the deformation amount of the deformation part based on the reference part as an objective variable are prepared. Note that to use the method for measuring the deformation amount of the deformation part of the additively manufactured test object according to the embodiment described above multiple times, the method for separating the additively manufactured test object from the upper surface of the baseplate may be unified. Additionally, the part of the additively manufactured test object separated from the upper surface of the baseplate may be unified. Furthermore, the direction and the process of separating the additively manufactured test object from the upper surface of the baseplate may be unified.

Next, in the determination step, for example, by using the design of experiments, such as response surface methodology, or, for example, the regression analysis, such as kernel ridge regression analysis and Support Vector Regression (SVR), and by using a prediction model after establishing the prediction model from the plurality of sets of the teacher data, the condition of additive manufacturing where the deformation amount of the deformation part based on the reference part becomes a predetermined value or less is obtained as the optimum condition for additive manufacturing to determine the optimum condition for the additive manufacturing. To establish the prediction model, the establishment process of the prediction model can be simplified in accordance with an analysis model or a numerical model described in the document or obtained by experiment or simulation or the known trend derived from underlying physics and mathematics.

Note that the use of the analysis model or the numerical model or the known trend derived from the underlying physics and mathematics allows associating the deformation of the additively manufactured test object with the internal stress and/or the internal load inside the structure. In view of this, using them, a condition of additive manufacturing that does not cause a breakage of the structure of the additively manufactured object, such as the additively manufactured test object, can be preliminarily grasped. Additionally, by using them, the state of the internal stress and/or the internal load inside the structure of the additively manufactured object, such as the additively manufactured test object, can be inferred.

### B. Method for Determining Optimum condition for Additive manufacturing

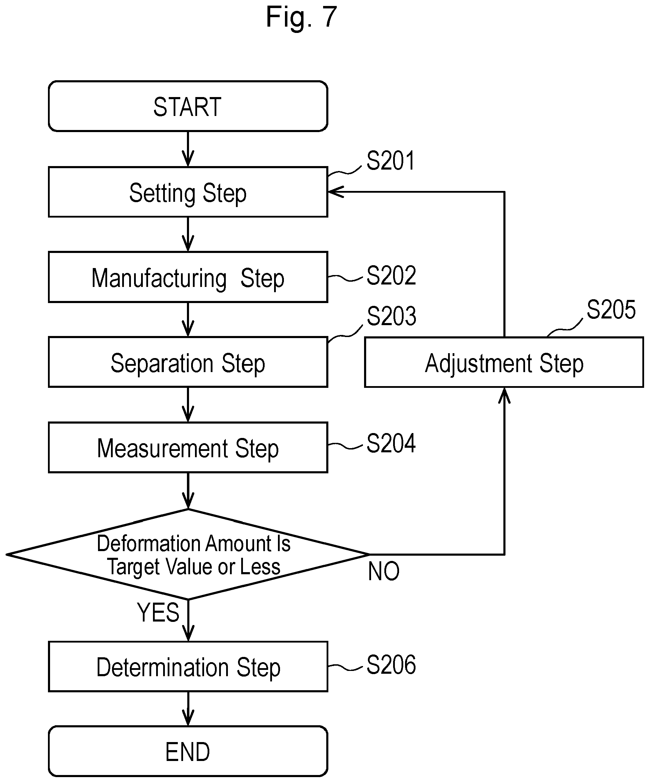

The following describes the method for determining an optimum condition for the additive manufacturing according to the embodiment of the present invention. First, the outline is described by exemplifying a second embodiment. Fig. 7 is a flowchart depicting the method for determining the optimum condition for the additive manufacturing according to the second embodiment.

The method for determining the optimum condition for the additive manufacturing according to the second embodiment is a method for determining an optimum condition for additive manufacturing used when the additive manufacturing is performed using the metal powder. In the method for determining the optimum condition for the additive manufacturing according to the second embodiment, first, as depicted in Fig. 7, a setting condition of the additive manufacturing is set to the predetermined condition (a setting step S201).

Next, as depicted in Fig. 7, by performing the additive manufacturing under the setting condition using the target metal powder for which the optimum condition for additive manufacturing are determined (for example, the powder of the stainless steel 316L), the additively manufactured test object including the reference part, the deformation part, and the coupling part arranged in the surface direction of the upper surface of the baseplate, in which the coupling part integrates the reference part and the deformation part, is manufactured on the upper surface of the baseplate such that the reference part, the deformation part, and the coupling part are joined to the upper surface of the baseplate (a manufacturing step S202).

Next, as depicted in Fig. 7, the additively manufactured test object is separated from the upper surface of the baseplate (a separation step S203). Next, as depicted in Fig. 7, the height hₘₑₐₙₛ of the deformation part based on the height h_{ref} of the reference part (the deformation amount of the deformation part based on the reference part) of the additively manufactured test object separated from the upper surface of the baseplate is measured (a measurement step S204).

Next, as depicted in Fig. 7, when the height hₘₑₐₙₛ of the deformation part based on the height h_{ref} of the reference part measured at the measurement step S204 exceeds a predetermined value, use of at least one kind of the design of experiments and the regression analysis obtains a correction condition of the additive manufacturing (an adjustment step S205). The correction condition of the additive manufacturing is a condition of the additive manufacturing under which the height hₘₑₐₙₛ of the deformation part based on the height h_{ref} of the reference part is inferred to be the predetermined value or less from the setting condition of the additive manufacturing and the height hₘₑₐₙₛ of the deformation part based on the height h_{ref} of the reference part measured in the measurement step S204. Specifically, first, use of at least one kind of the design of experiments and the regression analysis constructs the known prediction models from the plurality of sets of teacher data in which the condition of the additive manufacturing used when the additive manufacturing is performed using the known metal powder is set as the explanatory variable and the height hₘₑₐₙₛ of the deformation part based on the height h_{ref} of the reference part in this case is set as the objective variable. The prediction model that allows predicting the height hₘₑₐₙₛ of the deformation part based on the height h_{ref} of the reference part measured at the measurement step S204 from the setting condition of the additive manufacturing is selected from the known prediction models. Next, the correction condition of the additive manufacturing under which the height hₘₑₐₙₛ of the deformation part based on the height h_{ref} of the reference part is inferred to be the predetermined value or less when the additive manufacturing is performed using the powder of the stainless steel 316L (the metal powder) is obtained by using the selected prediction model.

Meanwhile, as depicted in Fig. 7, when the height hₘₑₐₙₛ of the deformation part based on the height h_{ref} of the reference part measured in the measurement step S204 (the deformation amount of the deformation part based on the reference part) is the predetermined value or less, the setting condition of the additive manufacturing is determined as the optimum condition for additive manufacturing (a determination step S206). After the determination step S206, the method for determining the optimum condition for additive manufacturing according to the second embodiment is terminated.

In the method for determining optimum condition for additive manufacturing according to the second embodiment, as depicted in Fig. 7, after the adjustment step S205, the setting step S201, the manufacturing step S202, the separation step S203, the measurement step 5204, and the adjustment step S205 are repeated in this order until the optimum condition for additive manufacturing are determined, and at the setting step S201 after the adjustment step S205, the correction condition of the additive manufacturing obtained in the adjustment step S205 is set as the predetermined condition.

Subsequently, the method for determining the optimum condition for the additive manufacturing according to the embodiment will be described in detail.

In the setting step, the setting condition of the additive manufacturing is set to the predetermined condition. An initial condition set as the predetermined condition in the first setting step is not specifically limited, and may be any of conditions of a list of the conditions of additive manufacturing designed to measure a limit of the metal powder used for the additive manufacturing. Additionally, the initial condition may be a known condition specified or approved as the optimum condition for additive manufacturing of the metal powder. At the second setting step and the setting step after the second setting step, the correction condition of the additive manufacturing obtained in the adjustment step is set as the predetermined condition.

The manufacturing step, the separation step, and the measurement step are similar to the manufacturing step, the separation step, and the measurement step described in the item of "A. Method for Measuring Deformation Amount of Deformation Part of Additively Manufactured Test Object and Method for Determining Optimum condition for Additive manufacturing Using Same" except that the additive manufacturing is performed under the setting condition set in the setting step in the manufacturing step.

While the embodiments have been described using the drawings and the like, the present invention is not limited to the above embodiments but has the configuration substantially same as the technical idea described in the claims of the present invention, the technical scope of the invention encompasses any construction that has the similar operation and effects, and various modifications are included. For example, the embodiments have been described in detail in a clearly understandable way of the present invention, and are not necessarily limited to those having all the described configurations. In addition, some of the configurations of a certain embodiment can be replaced with the configurations of the other embodiments, and the configurations of the other embodiments can be added to the configurations of the certain embodiment. In addition, some of the configurations of each embodiment can be added to, omitted, and replaced with other configurations.

### Reference Signs List

- 1: Additively manufactured test object
- 2: Baseplate
- 2t: Upper surface
- 10: Reference part
- 20: Deformation part
- 24: Cantilever part
- 26: Comb teeth part
- 30: Coupling part

All the publications, patents, and patent applications cited in this description are directly incorporated herein as references.

## Claims

1. A method for measuring a deformation amount of a deformation part of an additively manufactured test object manufactured on an upper surface of a baseplate by performing additive manufacturing using metal powder, the method comprising:
a manufacturing step of performing the additive manufacturing using the metal powder under a predetermined condition to manufacture the additively manufactured test object including a reference part, a deformation part, and a coupling part integrating the reference part and the deformation part arranged in a surface direction of the upper surface of the baseplate on the upper surface of the baseplate such that the reference part, the deformation part, and the coupling part are joined to the upper surface of the baseplate;
a separation step of separating the additively manufactured test object from the upper surface of the baseplate; and
a measurement step of measuring the deformation amount of the deformation part based on the reference part of the additively manufactured test object separated from the upper surface of the baseplate.

2. The method for measuring the deformation amount of the deformation part of the additively manufactured test object according to claim 1,
wherein the manufacturing step manufactures the additively manufactured test object including one or a plurality of the reference parts, one or a plurality of the deformation parts, and one or a plurality of the coupling parts.

3. The method for measuring the deformation amount of the deformation part of the additively manufactured test object according to claim 1 or 2,
wherein the measurement step measures a height of the deformation part based on a height of the reference part as the deformation amount.

4. The method for measuring the deformation amount of the deformation part of the additively manufactured test object according to claim 3,
wherein the height of the reference part is a height at one position of an upper surface of the reference part or an average of heights at a plurality of positions of the upper surface of the reference part.

5. The method for measuring the deformation amount of the deformation part of the additively manufactured test object according to claim 3 or 4,
wherein the height of the deformation part is a height at one position of an upper surface of the deformation part or an average of heights at a plurality of positions of the upper surface of the deformation part.

6. The method for measuring the deformation amount of the deformation part of the additively manufactured test object according to claim 3 or 4,
wherein the height of the deformation part is a maximum height of an upper surface of the deformation part.

7. The method for measuring the deformation amount of the deformation part of the additively manufactured test object according to any one of claims 1 to 6,
wherein the manufacturing step manufactures the reference part having a rectangular parallelepiped shape.

8. The method for measuring the deformation amount of the deformation part of the additively manufactured test object according to claim 7,
wherein the manufacturing step manufactures the reference part having a ratio of a width to a length of 3/4 or more to 5/4 or less.

9. The method for measuring the deformation amount of the deformation part of the additively manufactured test object according to any one of claims 1 to 8,
wherein the manufacturing step manufactures the deformation part that includes a cantilever part extending in the surface direction of the upper surface of the baseplate and a comb teeth part extending from a bottom surface of the cantilever part to the upper surface of the baseplate, and the deformation part has one end joined to the coupling part.

10. The method for measuring the deformation amount of the deformation part of the additively manufactured test object according to claim 9,
wherein the manufacturing step manufactures the cantilever part having a ratio of a length in an extending direction to a width larger than 5/4.

11. A method for determining an optimum condition for additive manufacturing, comprising:
a measurement step of using the method for measuring the deformation amount of the deformation part of the additively manufactured test object according to any one of claims 1 to 10 to measure the deformation amount of the deformation part; and
a determination step of determining the optimum condition for the additive manufacturing from the predetermined condition and the deformation amount.

12. A method for determining an optimum condition for additive manufacturing used when the additive manufacturing is performed using metal powder, the method comprising:
a setting step of setting a setting condition of the additive manufacturing to a predetermined condition;
a manufacturing step of performing the additive manufacturing using the metal powder under the setting condition to manufacture an additively manufactured test object including a reference part, a deformation part, and a coupling part integrating the reference part and the deformation part arranged in a surface direction of an upper surface of a baseplate on the upper surface of the baseplate such that the reference part, the deformation part, and the coupling part are joined to the upper surface of the baseplate;
a separation step of separating the additively manufactured test object from the upper surface of the baseplate;
a measurement step of measuring a deformation amount of the deformation part based on the reference part of the additively manufactured test object separated from the upper surface of the baseplate;
an adjustment step of using at least one kind of design of experiments and regression analysis to obtain a correction condition of the additive manufacturing under which the deformation amount is inferred to be a predetermined value or less from the setting condition and the deformation amount when the deformation amount exceeds the predetermined value after the measurement step; and
a determination step of determining the setting condition as the optimum condition for the additive manufacturing when the deformation amount is the predetermined value or less after the measurement step,
wherein after the adjustment step, the setting step, the manufacturing step, the separation step, the measurement step, and the adjustment step are repeated in this order until the optimum condition are determined, and at the setting step after the adjustment step, the predetermined condition is set to the correction condition.
